# EUROPÄISCHE PATENTSCHRIFT

(11) **EP 1 341 837 B1**
(45) Veröffentlichungstag und Bekanntmachung des Hinweises auf die Patenterteilung: **19.10.2005**
(21) Anmeldenummer: 01998580.3
(22) Anmeldetag: 08.11.2001
(51) Int. Cl.: C08G 64/20, C08G 64/30

(54) **VERFAHREN ZUM ERZEUGEN VON POLYCARBONATEN**
METHOD FOR PRODUCING POLYCARBONATES
PROCEDE DE PRODUCTION DE POLYCARBONATES

(30) Priorität: 01.12.2000 DE 10059616
(43) Veröffentlichungstag der Anmeldung: 10.09.2003
(73) Patentinhaber: Zimmer AG, 60388 Frankfurt (DE)
(72) Erfinder: KÄMPF, Rudolf, 63584 Haingründau (DE); WILHELM, Fritz, 61184 Karben (DE)
(74) Vertreter: Meyer-Dulheuer, Karl-Hermann
(86) Internationale Anmeldenummer: PCT/EP2001/012930
(87) Internationale Veröffentlichungsnummer: WO 2002/044244

(56) Entgegenhaltungen:
- US-A1- 2001 021 765
- US-B1- 6 204 352
- DATABASE CA [Online] CHEMICAL ABSTRACTS SERVICE, COLUMBUS, OHIO, US; HISANISHI, NORYUKI ET AL: "Manufacture of discoloration-reduced polycarbonates" retrieved from STN Database accession no. 124:57094 CA XP002187822 -& JP 07 242743 A 19. September 1995 (1995-09-19) & JP 07 242743 A (IDEMITSU PETROCHEMICAL CO, JAPAN) 19. September 1995 (1995-09-19)

## Beschreibung

Die Erfindung betrifft ein Verfahren zum Erzeugen von Polycarbonaten durch Umsetzen einer monomeren Carbonatkomponente mit mindestens einem Diphenol oder Dialkohol in Gegenwart eines Umesterungskatalysators, wobei man die geschmolzenen Komponenten mit dem Umesterungskatalysator verrührt und ein Umesterungsprodukt erzeugt, welches man polykondensiert.

Bei bekannten Verfahren zur kontinuierlichen Herstellung von Polycarbonaten werden vor dem Endreaktor bis zu 6 Rührkesselreaktoren mit vertikaler Rührwelle eingesetzt. Diese Rührkessel haben bezüglich Umsatz und Verweilzeitspektrum der Schmelze erhebliche Nachteile gegenüber Reaktoren, die von der Schmelze etwa horizontal durchflossen werden. Für gleich hohen Umsatz ist in einem Rührkessel je nach Reaktionsgeschwindigkeit ein 4- bis 100-fach größeres Reaktionsvolumen notwendig, wodurch sich größere Verweilzeiten ergeben. Auch hinsichtlich des Verweilzeitspektrums der Schmelze weist der Rührkessel erhebliche Nachteile auf, weil die Konzentration der zugeführten Schmelze sofort auf die Konzentration im Rührkessel verdünnt wird, die auch die Austrittskonzentration ist. Dies führt gegenüber dem horizontal durchströmten Reaktor mit Pfropfenströmung und nahezu gleicher örtlicher Verweildauer der Reaktanden zu einer breiteren Verteilung der Verweilzeiten. Im Rührkessel gelangen manche Partikel mit der Strömung rasch zum Reaktoraustritt, während andere mit dem umlaufenden Strom länger verweilen, was die Breite der Verweilzeitverteilung begründet. Zu bedenken ist ferner, dass bei sehr großen Reaktionsvolumina die Wirksamkeit des Rührers und die die Umlaufströmung behindernden Einbauten ebenfalls einen wesentlichen Einfluss auf die Verweilzeiten der Schmelze im Reaktionsraum haben. Bei Polymerisationsreaktionen ist dieses Verhalten schädlich, da durch lange Verweilzeiten eines Teils der Reaktionsmasse unerwünschte Nebenreaktionen begünstig werden und die Verteilung der Makromolekülketten in unerwünschter Weise verbreitert wird. Die Nebenreaktionen führen in bekannter Weise zu mehr oder minder starken Verfärbungen im Produkt.

Der Erfindung liegt die Aufgabe zugrunde, Polycarbonate mit möglichst enger Molekulargewichtsverteilung und geringen Seitenkettenverzweigungen zu erzeugen. Ferner soll das Produkt möglichst keine schwarzen Partikel, nur eine verschwindend geringe Gelbfärbung und auch nur einen geringen Gelgehalt aufweisen.

Erfindungsgemäß wird die Aufgabe dadurch gelöst, dass man das Umesterungsprodukt zur Polykondensation durch einen Vorreaktor, der mit Lochscheiben ausgerüstet ist, mindestens einen Zwischenreaktor und einen Endreaktor die mit Ringscheiben und letzterer zusätzlich mit ortsfesten Elementen ausgerüstet sind, leitet, wobei die Reaktoren in Serie geschaltet sind und eine im wesentlichen horizontale angetriebene Welle mit daran befestigten Rührelementen aufweisen, und wobei das Polycarbonat aus dem Endreaktor eine Schmelzverweilzeit von 5 Minuten bis 2 Stunden und vorzugsweise 15 bis 60 Minuten einhält, dass man die Temperaturen im Vorreaktor im Bereich von 220 bis 300 °C und im Endreaktor im Bereich von 240 bis 350 °C hält, und dass man aus jedem Reaktor Dämpfe absaugt, wobei man den Druck im Vorreaktor im Bereich von 100 bis 900 mbar und im Endreaktor im Bereich von 0,1 bis 50 mbar hält. Die Anzahl der in Serie geschalteten Zwischenreaktoren liegt üblicherweise bei 1 bis 3.

Für die monomere Carbonatkomponente kommen Diphenylcarbonat oder auch lineare oder zyklische Carbonate wie z.B. Dimethylcarbonat, Diethylcarbonat, Ethylenglykolcarbonat, Propylenglykolcarbonat und Butylenglykolcarbonat in Frage. Für die Diphenol- oder Dialkohol-Komponente eignet sich z.B. das im Handel unter dem Namen "Bisphenol A" bekannte Diphenol. Ein geeigneter Umesterungskatalysator ist z.B. im GB-Patent 1 079 822 beschrieben, er enthält Alkalisalze, Tetraalkylammoniumsalze und Tetraphenylborat.

Reaktoren, die als Vorreaktor, Zwischenreaktor oder auch Endreaktor in Frage kommen, sind z.B. in "Kunststoffe" 1/1992, Seite 17-20 beschrieben. Zum Erzeugen des Vakuums in den Reaktoren kann man z.B. mechanische Gebläse oder Dampfstrahl-Vakuumspumpen verwenden, wie sie im US-Patent 5 576 414 beschrieben sind. Man sorgt üblicherweise dafür, dass der Druck in einem unmittelbar nachfolgenden Reaktor höchstens nur halb so hoch wie im unmittelbar vorausgehenden Reaktor ist.

Für die erwünschte Pfropfenströmung in den Reaktoren ist es vorteilhaft, wenn jeder Reaktor im Innenbereich ein Verhältnis der horizontalen Länge L zum Durchmesser D von 1,2 : 1 bis 10 : 1 und vorzugsweise 1,5 : 1 bis 5 : 1 aufweist.

Die Verwendung von 3, 4 oder 5 Reaktoren mit horizontaler angetriebener Welle hat den Vorteil, dass man die Temperatur im nachfolgenden Reaktor gegenüber dem vorhergehenden Reaktor stufenweise anheben kann und auch der zum Absaugen der Spaltreaktoren notwendige Unterdruck stufenweise angepasst werden kann. Dadurch können zu Beginn der Polykondensation bei kurzen Kettenlängen der Moleküle und einem noch niedrigen Polymerschmelzpunkt niedrigere Anfangstemperaturen eingestellt werden. Auch entstehen zu Beginn der Polykondensation große Mengen an Spaltprodukten und es ist vorteilhaft, diese mit nur geringem Unterdruck abzusaugen, wobei man auch mit kostengünstigeren Pumpen arbeiten kann. In der Praxis haben sich für dieses Absaugen Dampf- oder Flüssigkeitsstrahler als besonders betriebssicher erwiesen.

Mit zunehmender Reaktionszeit und Reaktionstemperatur wachsen die Polymerketten, wobei die Zähigkeit der Schmelze ansteigt. Daran angepasst kann die Ausgestaltung der verschiedenen Polykondensationsreaktoren unterschiedlich sein. Möglich ist hierbei, dass der Innenraum einzelner Reaktoren von der langgestreckten zylindrischen Form abweicht und z.B. konische Form hat.

Es ist vorteilhaft, dass man einemoder mehreren Reaktoren das zuzuführende Zwischenprodukt durch die Lagerung der im wesentlichen horizontalen Welle des Reaktors einspeist. Dies erspart eine separate Abdichtung und Lagerung.

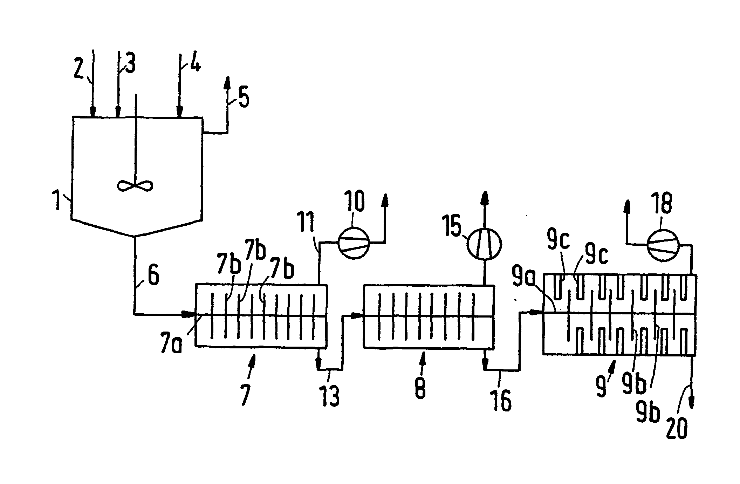

Ausgestaltungsmöglichkeiten des Verfahrens werden mit Hilfe der Zeichnung erläutert, sie zeigt ein Fließschema des Verfahrens.

Einem Rührkessel (1) gibt man durch die Leitung (2) die schmelzflüssige monomere Carbonatkomponente auf und führt durch die Leitung (3) Diphenol und/oder Dialkohol zu. Der Umesterungskatalysator wird durch die Leitung (4) herangeführt. Bei Temperaturen von 180 bis 260 °C werden die Komponenten im Rührkessel (1) vermischt, wobei die Polykondensation einzusetzen beginnt. Dämpfe werden in der Leitung (5) abgezogen. Das in der Leitung (6) kontinuierliche vom Rührkessel (1) zu einem Vorreaktor (7) fließende Umesterungsprodukt weist üblicherweise Moleküle mit durchschnittlichen Kettenlängen von 1,1 bis 8 Struktureinheiten und vorzugsweise 1,5 bis 4 Struktureinheiten auf. Das Umesterungsprodukt wird durch die Lagerung der Welle (7a) in den Vorreaktor (7) eingespeist.

Der Vorreaktor (7) besitzt eine horizontale Rührwelle (7a) mit radähnlichen Rührelementen (7b), wie man es von Polykondensationsreaktoren kennt. Im Vorreaktor sorgt man für eine Schmelzeverweilzeit von 5 Minuten bis 2 Stunden und zumeist 15 bis 60 Minuten; die Temperaturen liegen üblicherweise im Bereich von 220 bis 300 °C. Ein Gebläse (10) saugt durch die Leitung (11) Dämpfe aus dem Vorreaktor (7) ab und sorgt dabei für einen Druck im Bereich von 100 bis 800 mbar im Vorreaktor (7). Die Dämpfe werden einer nicht dargestellten Aufarbeitung mit Kondensation zugeführt.

Das den Vorreaktor (7) in der Leitung (13) verlassende Zwischenprodukt weist Moleküle mit durchschnittlichen Kettenlängen von 10 bis 25 Struktureinheiten auf. Dieses Zwischenprodukt wird in den Zwischenreaktor (8) geführt, der apparativ z.B. ähnlich wie der Vorreaktor (7) im Bereich von 5 Minuten bis 2 Stunden und vorzugsweise 15 bis 60 Minuten. Man sorgt im Zwischenreaktor für Temperaturen im Bereich von 230 bis 320 °C und einen Druck von 5 bis 200 mbar, der mit Hilfe des Absauggebläses (15) aufrechterhalten wird.

Das den Zwischenreaktor (8) in der Leitung 816) verlassende Zwischenprodukt weist Moleküle mit einer durchschnittlichen Kettenlänge von 30 bis 100 Struktureinheiten auf; dieses schmelzflüssige Zwischenprodukt wird dem Endreaktor (9) zugeführt. Der Endreaktor besitzt neben der horizontalen Rührwelle (9a) mit radförmigen Rührelementen (9b) vorzugsweise auch noch ortsfeste Elemente (9c). Die Temperaturen im Endreaktor (9) liegen im Bereich von 240 bis 350 °C und der Druck beträgt üblicherweise 0,1 bis 50 mbar. Ein Gebläse (18) zieht Dämpfe aus dem Endreaktor (9) ab.

Das Polycarbonat-Produkt fällt in der Leitung (20) an, es ist noch pumpfähig und besteht aus Molekülen mit durchschnittlichen Kettenlängen im Bereich von 40 bis 300 Struktureinheiten und zumeist mindestens 80 Struktureinheiten. Die Dämpfe, die durch die Gebläse (15) und (18) abgezogen werden, können vorzugsweise zusammen mit den durch das Gebläse (10) geförderten Dämpfen aufgearbeitet werden, wobei man in an sich bekannter Weise Wertstoffe zurückgewinnen kann.

### Beispiele:

Man arbeitet mit einer Versuchsanlage, wie sie in der Zeichnung dargestellt ist. Im Beispiel 4 gibt es nach dem ersten Vorreaktor (7) noch einen daran anschließenden zweiten Vorreaktor (77), ebenso im Beispiel 5, wo auch noch ein zweiter Zwischenreaktor (88) vorhanden ist. Die Vorreaktoren sind mit Lochscheiben ausgerüstet, die Zwischenreaktoren und die Endreaktoren (9) mit Ringscheiben und letztere zusätzlich mit ortsfesten Elementen (9c).

Dem mit Mantelbeheizung versehenen Rührkessel (1) gibt man durch die Leitung (2) schmelzflüssiges Bisphenol A und durch die Leitung (3) schmelzflüssiges Diphenylcarbonat zu, ferner einen an sich bekannten Umesterungskatalysator, der im wesentlichen aus Alkalisalzen, Tetraalkylammoniumsalzen und Tetraphenylborat besteht.

### Beispiel 1:

Dem Rührkessel (1) gibt man 45 kg/h Bisphenol A und 47 kg/h Diphenylcarbonat auf, sowie 25 g/h Katalysator. Die Umsetzung erfolgt bei einer Temperatur von 220 °C und einem Druck von 800 mbar. Freigesetztes Phenol wird abgezogen und zur Bestimmung des Reaktionsfortschritts aufgefangen und gewogen. Das umgeesterte Produkt aus dem Rührkessel hat nur eine niedrige mittlere Polymerkettenlänge, die im Mittelwert bei 3 Struktureinheiten liegt, und es enthält noch geringe Mengen an unreagiertem Monomer. Dieses Vorprodukt gelangt in den Vorreaktor (7), der bei einem Druck von 200 mbar betrieben wird.

Einzelheiten der Arbeitsweise im Vorreaktor (7), Zwischenreaktor (8) und Endreaktor (9) bezüglich Temperatur T und Druck p ergeben sich aus der nachfolgenden Tabelle 1. A Bedeutet die Menge an Polycarbonat-Endprodukt, welches durch die Leitung (20) abgezogen wird.

**Tabelle 1:**

| | **A** | **(7)** | **(77)** | **(8)** | **(88)** | **(9)** |
|---|---|---|---|---|---|---|
| | | **T (C°)** **p (mbar)** | **T (°C)** **p (mbar)** | **T (°C)** **p (mbar)** | **T (°C)** **p (mbar)** | **T (°C)** **p (mbar)** |
| **Beispiel 1** | 50 kg/h | 270 | - | 285 | - | 310 |
| | | 200 | | 15 | | 1,8 |
| **Beispiel 2** | 75 kg/h | 270 | - | 285 | - | 310 |
| | | 200 | | 15 | | 1,8 |
| **Beispiel 3** | 100 kg/h | 270 | - | 285 | - | 310 |
| | | 200 | | 15 | | 1,8 |
| **Beispiel 4** | 50 kg/h | 275 | 280 | 300 | - | 320 |
| | | 250 | 100 | 15 | | 0,5 |
| **Beispiel 5** | 50 kg/h | 275 | 280 | 285 | 305 | 320 |
| | | 250 | 100 | 25 | 10 | 0,5 |
| **Beispiel 6** | 75 kg/h | 280 | - | 300 | - | 320 |
| | | 150 | | 15 | | 0,5 |

Die Tabelle 1 gibt ferner die Daten für die nachfolgend erläuterten Beispiele 2 bis 6 wieder.

Im Beispiel 1 hat der Vorreaktor (7) ein Volumen von 50 Liter und ein Verhältnis der Länge L zum Durchmesser D von L/D = 2,3; beim Zwischenreaktor (8) beträgt das Verhältnis L/D = 2,2 bei einem Volumen von 48 Liter, und der Endreaktor (9) hat ein Volumen von 45 Liter und ein Verhältnis L/D = 2,5.

Die folgende Tabelle 2 gibt zum Beispiel 1 sowie auch zu den anderen Beispielen Verweilzeiten t und mittlere Kettenlängen K des Polykondensats am Ausgang des jeweiligen Reaktors an, wobei zu K die Anzahl der Struktureinheiten angegeben sind.

**Tabelle 2**

| | **(7)** | | **(77)** | | **(8)** | | **(88)** | | **(9)** | |
|---|---|---|---|---|---|---|---|---|---|---|
| | **t(min)** | **K** | **t(min)** | **K** | **t(min)** | **K** | **t(min)** | **K** | **t(min)** | **K** |
| **Beispiel 1** | 30 | 17 | - | - | 30 | 43 | - | - | 30 | 78 |
| **Beispiel 2** | 20 | 15 | - | - | 20 | 35 | - | - | 20 | 54 |
| **Beispiel 3** | 10 | 13 | - | - | 10 | 30 | - | - | 10 | 48 |
| **Beispiel 4** | 20 | 12 | 20 | 37 | 30 | 60 | - | - | 30 | 132 |
| **Beispiel 5** | 20 | 12 | 20 | 37 | 30 | 48 | 30 | 65 | 30 | 152 |
| **Beispiel 6** | 20 | 20 | - | - | 20 | 51 | - | - | 20 | 107 |

Gemäß Beispiel 1 gelangt das Zwischenprodukt vom Vorreaktor (7) zum Zwischenreaktor (8), wobei man wegen der zunehmenden Kettenlänge der Moleküle im Zwischenreaktor etwas andere Rührorgane als im Vorreaktor verwendet. Im Zwischenreaktor sorgt man für einen Abstand von 3 mm zwischen den Rührorganen und der Innenwand. Aus dem Zwischenreaktor gelangt das Produkt mit einer mittleren Kettenlänge von 43 Struktureinheiten mit Hilfe einer Zahnradpumpe in den Endreaktor (9). Das den Endreaktor verlassenden Produkt weist nur geringe Gelbfärbung durch Abbauprodukte auf, das Produkt besitzt sehr geringe Anteile an Gelen und schwarzen Partikeln sowie eine enge Molekulargewichtsverteilung und geringste Kettenverzweigungen, wie das unten aus Tabelle 3 hervorgeht.

### Beispiel 2:

Man arbeitet mit der Verfahrensführung des Beispiels 1, wobei eine Verweilzeit von 20 Minuten in jedem Reaktor eingestellt wird.

### Beispiel 3:

Man arbeitet mit der Verfahrensführung des Beispiels 1 und sorgt für eine Verweilzeit von 10 Minuten in jedem Reaktor.

### Beispiel 4:

Man arbeitet mit 2 Vorreaktoren (7) und (77), die beide ein Verhältnis L/D = 1,5 besitzen.

### Beispiel 5:

Das Beispiel 4 wird dahingehend verändert, dass man neben den zwei Vorreaktoren auch noch einen ersten Zwischenreaktor (8) und einen zweiten Zwischenreaktor (88) verwendet.

### Beispiel 6:

Man arbeitet mit der Verfahrensführung des Beispiels 1 und verwendet nunmehr einen einzigen Endreaktor (9) mit einem Verhältnis L/D von 3.

Die Qualität des jeweils erzeugten Endprodukts ergibt sich nachfolgend aus Tabelle 3:

**Tabelle 3:**

| | **b** | **L** | **P** | **G** | **SP** | **V** |
|---|---|---|---|---|---|---|
| Beispiel 1 | 1,93 | 97,2 | 2,33 | 0,22 | 2,30 | 1,00 |
| Beispiel 2 | 1,73 | 98,1 | 2,29 | 0,21 | 1,88 | 0,50 |
| Beispiel 3 | 1,64 | 98,3 | 2,11 | 0,19 | 1,56 | 0,10 |
| Beispiel 4 | 1,68 | 98,0 | 2,50 | 0,21 | 1,78 | 1,20 |
| Beispiel 5 | 1,72 | 97,9 | 2,59 | 0,24 | 1,80 | 1,05 |
| Beispiel 6 | 1,80 | 97,5 | 2,28 | 0,19 | 2,10 | 0,95 |

Es bedeuten:
b ist der sogenannte b-Wert, welcher die Gelb-Blau-Stichigkeiten angibt.
L = Lichtdurchlässigkeits-Index, er gibt den Grad der Transparenz an, gemessen in %, bezogen auf den Normwert. Die Werte b und L werden mit dem Gardner-Colorimeter gemessen.
P ist die Polydispersität, gemessen mit einem Membranosmometer unter Berücksichtigung der gemessenen Lichtstreuung. Das Membranosmometer (Firma Knauer, Berlin (DE)) liefert den Zahlenmittelwert des Molekulargewichts, die Lichtstreuung liefert den Gewichtsmittelwert der Moleküle. Das Verhältnis von Gewichtsmittelwert zu Zahlenmittelwert ergibt P.
G ist der Gelgehalt in mg/1000 kg, er wird wie folgt gemessen:
   1 kg Polycarbonat-Endprodukt werden 10 kg Methylenchlorid gelöst, die Lösung wird durch einen Microfilter mit einer Porenweise von 1 µm geleitet, der Filterrückstand wird gewogen, er setzt sich zusammen aus den Gelen und den schwarzen Partikeln. Der Gehalt an schwarzen Partikeln wird optisch bestimmt, ihre Anzahl pro 100 kg Polycarbonat ist in der Spalte SP angegeben.

## Patentansprüche

1. Verfahren zum Erzeugen von Polycarbonaten durch Umsetzen einer monomeren Carbonatkomponente mit mindestens einem Diphenol oder Dialkohol in Gegenwart eines Umesterungskatalysators, wobei man die geschmolzenen Komponenten mit dem Umesterungskatalysator verrührt und ein Umesterungsprodukt erzeugt, welches man polykondensiert, **dadurch gekennzeichnet, dass** man das Umsterungsprodukt zur Polykondensation durch einen Vorreaktor, der mit Lochscheiben ausgerüstet ist, mindestens einen Zwischenreaktor und einen Endreaktor, die mit Ringscheiben und letzterer zusätzlich mit ortsfesten Elementen (9c) ausgerüstet sind, leitet, wobei die Reaktoren in Serie geschaltet sind und eine im Wesentlichen horizontale angetriebene Welle mit daran befestigten Rührelementen aufweisen, und wobei das Polycarbonat aus dem Endreaktor abgezogen wird, dass man im Vorreaktor und im Endreaktor eine Schmelzverweilzeit von 5 Minuten bis 2 Stunden einhält, dass man die Temperaturen im Vorreaktor im Bereich von 220 bis 300°C und im Endreaktor im Bereich von 240 bis 350°C hält, und dass man aus jedem Reaktor Dämpfe absaugt, wobei man den Druck im Vorreaktor im Bereich von 100 bis 900 mbar und im Endreaktor im Bereich von 0,1 bis 50 mbar hält.

2. Verfahren nach Anspruch 1, **dadurch gekennzeichnet, dass** der Druck in einem unmittelbar nachfolgenden Reaktor höchstens nur halb so hoch wie im unmittelbar vorausgehenden Reaktor ist.

3. Verfahren nach Anspruch 1 oder 2, **dadurch gekennzeichnet, dass** jeder Reaktor im Innenbereich ein Verhältnis der horizontalen Länge L zum Durchmesser D von 1,2 : 1 bis 10 : 1 aufweist.

4. Verfahren nach Anspruch 1 oder einem der vorhergehenden Ansprüche, **dadurch gekennzeichnet, dass** man dem Vorreaktor ein Umesterungsprodukt zuführt, dessen Moleküle durchschnittliche Kettenlängen von 1,1 bis 8 Struktureinheiten aufweisen.

5. Verfahren nach Anspruch 1 oder einem der vorhergehenden Ansprüche, **dadurch gekennzeichnet, dass** die aus dem Vorreaktor abgezogene Schmelze durchschnittliche Kettenlängen der Moleküle von 10 bis 25 Struktureinheiten aufweist.

6. Verfahren nach Anspruch 1 oder einem der vorhergehenden Ansprüche, **dadurch gekennzeichnet, dass** man dem Endreaktor eine Schmelze mit einer durchschnittlichen Kettenlänge der Moleküle von 30 bis 100 Struktureinheiten zuführt.

7. Verfahren nach Anspruch 1 oder einem der vorhergehenden Ansprüche, **dadurch gekennzeichnet, dass** mindestens einem der Reaktoren ein Zwischenprodukt durch die Lagerung seiner im Wesentlichen horizontalen Welle zugeführt wird.

## Claims

1. A method for the production of polycarbonates by means of reaction of a monomeric carbonate component with at least one diphenol or dialcohol in presence of a transesterification catalyst, wherein the molten components are stirred with the transesterification catalyst and produce a transesterification product, which is polycondensed, **characterized in that** the transesterification product is fed for the polycondensation via a pre-reactor, which is equipped with perforated discs, at least one intermediate reactor, and an end reactor, which is equipped with flat rings and the latter additionally with stationary elements (9c), wherein the reactors are connected in series and have one in the horizontal essentially self-powered shaft with stirring elements secured thereto, and wherein the polycarbonate is produced from the end reactor, that in the pre-reactor and and in the end-reactor a melt retention time is maintained of from 5 minutes to 2 hours, that the temperature in the pre-reactor is held in the range from 220 to 300 °C, and in the end-reactor in the range from 240 to 350 °C, and that steam is evacuated from each reactor, wherein the pressure in the pre-reactor is held in the range from 100 to 900 mbar and in the end reactor in the range from 0.1 to 50 mbar.

2. The method according to claim 1, **characterized in that** the pressure in an immediately downstream reactor is at the most only half as much as in the immediately preceding reactor.

3. The method according to claim 1 or 2, **characterized in that** each reactor in the interior region has a ratio of horizontal length L to the diameter D of 1.2:1 to 10:1.

4. The method according to claim 1 or one of the preceding claims, **characterized in that** a transesterification product is fed to the pre-reactor, whose average molecule chain length is 1.1 to 8 structure units.

5. The method according to claim 1 or one of the preceding claims **characterized in that** the melt coming out of the pre-reactor has average molecule chain lengths from 10 to 25 structure units.

6. The method according to claim 1 or one of the preceding claims **characterized in that** a melt with an average molecule chain length from 30 to 100 structure units is fed to the end-reactor.

7. The method according to claim 1 or one of the preceding claims **characterized in that** an intermediate product is fed to at least one of the reactors via its arrangement in the essentially horizontal shaft.

## Revendications

1. Procédé de production de polycarbonates par réaction d'un composant monomère de carbonate avec au moins un diphénol ou un dialcool en présence d'un catalyseur de transestérification, du type selon lequel on agite de manière poussée les composants fondus avec le catalyseur de transestérification et selon lequel on produit un produit de transestérification que l'on soumet à une polycondensation, **caractérisé en ce que** l'on dirige le produit de transestérification destiné à la polycondensation à travers un pré-réacteur qui est doté de disques perforés, à travers au moins un réacteur intermédiaire et un réacteur final qui sont dotés de disques annulaires ainsi que pour ce dernier réacteur d'éléments stationnaires (9c), les réacteurs étant reliés en série et présentant un arbre d'entraînement essentiellement horizontal avec des éléments d'agitation fixés sur ledit arbre, et le polycarbonate étant extrait du réacteur final, **en ce que** l'on respecte dans le pré-réacteur et dans le réacteur final un temps de séjour du produit fondu allant de 5 minutes à 2 heures, **en ce que** l'on maintient les températures dans le pré-réacteur dans le domaine allant de 220 à 300 °C et dans le réacteur final dans le domaine allant de 240 à 350 °C, et **en ce que** l'on aspire des vapeurs hors de chaque réacteur, en maintenant la pression dans le pré-réacteur dans le domaine allant de 100 à 900 mbars et dans le réacteur final dans le domaine allant de 0,1 à 50 mbars.

2. Procédé selon la revendication 1, **caractérisé en ce que** la pression dans un réacteur situé directement en aval est tout au plus égale à la moitié de celle existant dans le réacteur situé directement en amont.

3. Procédé selon la revendication 1 ou 2, **caractérisé en ce que** chaque réacteur en son intérieur présente un rapport de la longueur horizontale L par rapport au diamètre D allant de 1,2 : 1 à 10 : 1.

4. Procédé selon la revendication 1 ou l'une des revendications précédentes, **caractérisé en ce que** l'on introduit dans le pré-réacteur un produit de transestérification, dont les molécules présentent des longueurs moyennes de chaîne allant de 1,1 à 8 motifs structuraux.

5. Procédé selon la revendication 1 ou l'une des revendications précédentes, **caractérisé en ce que** le produit fondu extrait hors du pré-réacteur présente des longueurs moyennes de chaîne allant de 10 à 25 motifs structuraux.

6. Procédé selon la revendication 1 ou l'une des revendications précédentes, **caractérisé en ce que** l'on introduit dans le réacteur final un produit fondu avec une longueur moyenne de chaîne allant de 30 à 100 motifs structuraux.

7. Procédé selon la revendication 1 ou l'une des revendications précédentes, **caractérisé en ce que** l'on introduit dans au moins l'un des réacteurs un produit intermédiaire par la zone formant palier de son arbre essentiellement horizontal.
